(19) Europäisches Patentamt
European Patent Office
Office européen des brevets

(11) Veröffentlichungsnummer: **0 212 708 B1**

(12) # EUROPÄISCHE PATENTSCHRIFT

(45) Veröffentlichungstag der Patentschrift: **14.03.90**

(51) Int. Cl.⁴: **C07F 5/02**

(21) Anmeldenummer: **86201257.2**

(22) Anmeldetag: **18.07.86**

(54) **Verfahren zur Hydroborierung von Alkenen und Alkinen.**

(30) Priorität: **07.08.85 DE 3528320**

(43) Veröffentlichungstag der Anmeldung: **04.03.87 Patentblatt 87/10**

(45) Bekanntmachung des Hinweises auf die Patenterteilung: **14.03.90 Patentblatt 90/11**

(84) Benannte Vertragsstaaten: **AT BE CH DE FR GB IT LI NL**

(56) Entgegenhaltungen:
**EP-A- 0 212 707**

**CHEMICAL ABSTRACTS, Band 101, Nr. 23, 3. Dezember 1984, Seite 659, Zusammenfassung Nr. 211227w, Columbus, Ohio, US; L. MENDOZA et al.: "Catalytic effect of lithium bromide on the hydroboration of alkenes and reduction of carbonyl compounds with catecholborane"yl-2-ethylhexanamide and N,N-di-n-hexyloctanamide", & COM. NAZ. ENERG. NUCL. [RAPP. TEC.] 000**
**JOURNAL OF THE AMERICAN CHEMICAL SOCIETY, Band 97, Nr. 18, 3. September 1975, Seiten 5249-5255, Washington, D.C., US; H.C. BROWN et al.: "Hydroboration. XXXIX. 1,3,2-benzodioxaborole (catecholborane) as a new hydroboration reagent for alkenes and alkynes. A general synthesis of alkane- and**

(73) Patentinhaber: **METALLGESELLSCHAFT AG, Reuterweg 14 Postfach 3724, D-6000 Frankfurt/M.1(DE)**

(72) Erfinder: **Nöth, Heinrich, Prof. Dr., Eichleite 25 a, D-8022 Grünwald(DE)**
Erfinder: **Männig, Detlev, Boschetsriederstrasse 15, D-8000 München 70(DE)**

(74) Vertreter: **Rieger, Harald, Dr., Reuterweg 14, D-6000 Frankfurt am Main(DE)**

(56) Entgegenhaltungen: (Fortsetzung)
**alkeneboronic acids and esters via hydroboration. Directive effect in the hydroboration of alkenes and alkynes with catecholborane"**
**"Inorg. Synth." 10 (1967) S. 67 - 71**

EP 0 212 708 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft ein Verfahren zur Hydroborierung von Alkenen und Alkinen mit Catecholboran.

Es ist bekannt, daß Catecholboran (1,3,2-Benzodioxaborolan) in nahezu quantitativer Ausbeute Alkene und Alkine bei erhöhter Temperatur, üblicherweise in Abwesenheit eines Lösungsmittels zu reduzieren vermag. Hierbei wird das Catecholboran im Überschuß eingesetzt und die Reaktionstemperaturen liegen zwischen etwa 70 und 120°C ("J. Amer. Chem. Soc." 97 (1975) S. 5249–5255). Es ist weiterhin bekannt, daß Lösungen der Komplexverbindung Tris(triphenylphosphin)rhodium(I)chlorid bei einer Temperatur von 25°C und einem Druck von 1 at molekularen Wasserstoff in reversibler Weise absorbieren. Derartige Lösungen sind hochwirksame Katalysatoren für die homogene Hydrogenierung von Alkenen und Alkinen ("Inorg. Synth." 10 (1967), S. 67–71).

Die vorbekannten Verfahren zur Hydroborierung von Alkenen und Alkinen befriedigen nicht in allen Fällen, weil mit Catecholboran bei erhöhten Temperaturen gearbeitet wird und ein erheblicher Überschuß eingesetzt werden muß. Insbesondere versagen diese Verfahren, wenn das organische Substrat funktionelle Gruppen, vor allem Ketogruppen, enthält, da diese rascher als die C=C-Funktion reduziert wird.

Der Erfindung liegt die Aufgabe zugrunde, ein Verfahren zur spezifischen Hydroborierung von Alkenen und Alkinen bereitzustellen, welches die Nachteile der bekannten Verfahren und insbesondere die vorgenannten Nachteile vermeidet. Im Sinne der Erfindung werden unter Alkenen neben Monoolefinen auch Diolefine und Cycloolefine sowie olefinische Verbindungen, wie ungesättigte Ketone und Nitrile verstanden.

Die Erfindung löst die Aufgabe mit einem Verfahren zur Hydroborierung von Alkenen oder Alkinen durch Behandlung dieser Verbindungen, gegebenenfalls unter Zusatz eines organischen Lösungsmittels, mit 1, 3, 2-Benzodioxaborolan (Catecholboran). Bei einem Verfahren der genannten Art besteht die Erfindung darin, daß die Reaktion mit einer Komplexverbindung der Formeln:

(I) $RhCl(CO)_x[E(C_6H_5)_3]_{3-x}$,

worin "E" Arsen oder Phosphor und "x" gleich

0 oder 1 ist,

(II) $[RhCl(alken)_2]_2$,

(III) $[(C_6H_5)_3P]_3Ru(CO)ClH$ oder

(IV) $[(C_6H_5)_3P]_3RuCl_2$

katalysiert wird.

Mit dem erfindungsgemäßen Verfahren wird ein spezifisch wirkendes Hydroborierungssystem bereitgestellt, das bei guter Lagerfähigkeit eine hohe Reaktionsgeschwindigkeit ermöglicht, gut zu handhaben und gut dosierbar ist.

Geeignete Rhodium(I)chloridkomplexverbindungen sind beispielsweise:

Tris(triphenylphosphin)rhodium(I)chlorid $[P(C_6H_5)_3]_3RhCl$,

Tris(diphenylphosphin)rhodium(I)chlorid $[(C_6H_5)_2PH]_3RhCl$

Bis(triphenylphosphin)rhodium(I)carbonylchlorid $[P(C_6H_5)_3]_2(CO)RhCl$,

Bis(triphenylarsin)rhodium(I)carbonylchlorid $[As(C_6H_5)_3]_2(CO)RhCl$.

Bis(äthylen)rhodium(I)chlorid $[(C_2H_4)_2RhCl]_2$

Bis(cyclooctadien)rhodium(I)chlorid $[COD)_2RhCl]_2$.

Geeignete Ruthenium(II)chloridkomplexverbindungen sind:

Tris(triphenylphosphin)carbonylruthenium(II)chloridhydrid $[(C_6H_5)_3P]_3Ru(CO)ClH$

Tris(triphenylphosphin)ruthenium(II)dichlorid $[(C_6H_5)_3P]_3RuCl_2$.

Es kann angenommen werden, daß die katalytische Hydroborierung etwa nach folgendem Reaktionsschema abläuft (im Schema wird unter "L" der Rest $P(C_6H_5)_3$ verstanden):

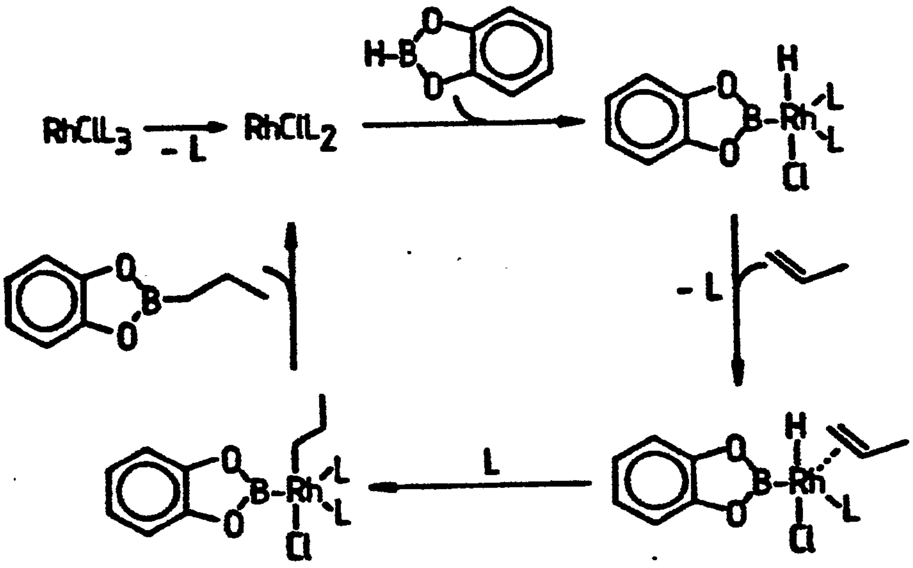

L = PPh3

Zur Durchführung des erfindungsgemäßen Verfahrens wird zweckmäßig das Olefin, worunter auch ungesättigte Ketone und Nitrile verstanden werden, bzw. das Alkin und der Katalysator, wie Tris(triphenylphosphin)rhodium(I)chlorid, in einem Lösungsmittel, wie Benzol, Toluol, Hexan oder in einem schwach koordinierenden Äther wie Diäthyläther dispergiert und unter Rühren Catecholboran zugesetzt.

Die Umsetzung setzt bereits bei Raumtemperatur ein, im allgemeinen bei Temperaturen von 15 bis 25 °C. Niedrigere (wie 0°) oder höhere Temperaturen (wie 40 °) können ebenfalls vorgesehen werden, bringen jedoch hinsichtlich Ausbeute und Reaktionsgeschwindigkeit keine nennenswerten Vorteile. Mit Beginn der Hydroborierung verfärbt sich das Reaktionsgemisch von rot nach gelb und nach vollständiger Umsetzung tritt wieder die Rotfärbung ein. Nach beendeter Reaktion wird das Reaktionsgemisch auf eine Temperatur oberhalb des Siedepunktes des Alkens oder Alkins (ggf. bei Unterdruck), z.B. 70 °C, erhitzt, um überschüssiges Alken oder Alkin abzutreiben. Der Katalysator oder sein katalytisch wirksames Folgeprodukt sind im Reaktionsmedium oft wenig löslich; sie können durch Filtration von dem in Lösung befindlichen Hydroborierungsprodukt abgetrennt, ggf. mit z.B. Toluol ausgewaschen und der Wiederverwendung zugeführt werden.

Das Hydroborierungsprodukt läßt sich dann in bekannter Weise durch geeignete Umsetzungen (z.B. Protonolyse, Oxidation, Aminierung, Carbonylierung und Halogenolyse) in verschiedene Folgeprodukte des Alkens oder Alkins überführen (siehe H.C. Brown "Organic Synthesis via Boranes" J. Wiley, Intersc. Publ. New York 1975).

Der Katalysator wie auch das Catecholboran werden nach an sich bekannten Methoden hergestellt.

Zur Herstellung des Katalysators, wie z.B. Tris(triphenylphosphin)rhodium(I)chlorid, wird Rhodiumtrichlorid Trihydrat in Äthanol und Triphenylphosphin, gelöst in heißem Äthanol, unter Rückflußbedingungen und unter Stickstoffatmosphäre zur Reaktion gebracht. Das sich bildende kristalline Produkt von dunkelroter Farbe wird abfiltriert (J. A. Osborn/G. Wilkinson "Inorg. Synth." 10 (1967), S. 67).

Catecholboran (1,3,2-Benzodioxaborolan) ist leicht durch Umsetzung von Brenzcatechin mit Boran in Tetrahydrofuran unter Stickstoffatmosphäre bei Temperaturen von etwa 0°C herstellbar. Das Reaktionsprodukt wird aus der Lösung unter vermindertem Druck abdestilliert.

In besonders vorteilhafter Weise kann Catecholboran dadurch hergestellt werden, daß Tris(brenzcatechinato)bisboran mit Alkaliborhydrid in Diäthyläther unter aktivierender Mahlung und ggf. unter Mitverwendung von Lithiumhalogenid als Löslichkeitsvermittler umgesetzt wird. Hierbei kann ein lösungsmittelfreies Produkt hergestellt werden (EP-A 212 707).

Die Vorteile des erfindungsgemäßen Verfahrens sind darin zu sehen, daß leicht flüchtige und thermisch labile Alkene und Alkine bei vergleichsweise niedrigen Temperaturen hydroboriert werden können. Nach dem erfindungsgemäßen Verfahren läßt sich auch die C=C-Doppelbindung von ungesättigten Ketonen oder Nitrilen hydroborieren, ohne daß die Carbonyl- bzw. Nitrilfunktion in größerem Umfang angegriffen wird. Ohne Katalysatorumsatz wird dagegen die Keto- bzw. die Nitrilgruppe quantitativ reduziert.

Die Erfindung wird anhand der nachstehenden Beispiele näher und beispielhaft erläutert.

A) Katalytische Hydroborierung von Olefinen

In einem 50 ml-Dreihalskolben, versehen mit magnetischem Rührer, Tropftrichter, Thermometer und Rückflußkühler mit Anschluß für die Einleitung von Stickstoff, wurde das Olefin (45 mmol) in 7,5 ml Benzol gelöst und bei Raumtemperatur mit 20,8 mg (0,05 mol %) $[(C_6H_5)_3P]_3RhCl$ versetzt. Zur gerührten, roten Lösung tropft man in 10 - 20 min die äquivalente Menge Catecholboranzu. Die Reduktion verläuft exotherm und kann bis zum Sieden des Benzols führen. Nach 25 min wird destillativ aufgearbeitet und das 2-organyl-benzo-1, 3, 2-dioxaborolan isoliert.

Die Ergenisse dieser mit einer Reihe von Olefinen durchgeführten Umsetzung, sind in folgender Tabelle aufgeführt. Die Ausbeute ist hierbei nicht optimiert.

| Substrat | 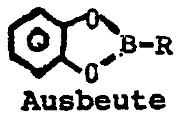 Ausbeute % | Sdp°C/Torr | $\delta\,^{11}B$(ppm) |
|---|---|---|---|
| 1-Octen | 77,7 | 96-97/0,12 | 35,8 |
| Norbornen | 77,8 | 94/0,01 | 35,5 |
| Cyclopenten | 83,3 | 62/0,01 | 36,9 |
| Cyclohexen | 21,5[a)] | 71/0,01 | 35,4 |
| 2,4,4-Trimethyl-1-penten | 5,8[b)] | 96/0,08 | 35,4 |
| 3-Vinyl-Cyclohexen | 50,0[c)] | 83/0,1 | 35,7 |

a) Nach 4 Tagen 50proz. Umsatz

b) Nach 2 Tagen etwa 50proz. Umsatz

c) Ausschließlich Reaktion an der Vinyl-Gruppe

Bei Verwendung von Ruthenium(II)chloridkomplexverbindungen, wie $[(C_6H_5)_3P]_3Ru(CO)ClH$ oder $[(C_6H_5)_3P]_3RuCl_2$ werden ähnliche Ergebnisse, jedoch bei längeren Reaktionszeiten, erhalten.

B) Katalytische Hydroborierung von ungesättigten Ketonen

Die Arbeitsweise entspricht der in A) wiedergegebenen Vorschrift. Die Reaktanten wurden hierbei in folgenden Mengen eingesetzt : je 22,5 mmol Substrat und Catecholboran, 05 mol % Tris(triphenylphosphin)rhodium(I)chlorid und 70 ml Benzol. Das Reaktionsgemisch wurde 1 -2 h gerührt und danach destillativ aufgearbeitet.

| Substrat | Katalysator | a) 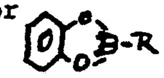 | | a) 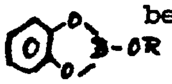 | Ausbeute-% b) | Sdp°C/Torr | $\delta^{11}B$ (ppm) |
|---|---|---|---|---|---|---|---|
| 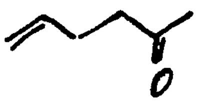 | - | 0 | : | 100 | 75,8 | 74/0,08 c) | 23,2 c) |
| | + | 83 | : | 17 | 53,8 | 102/0,09 d) | 35,7 d) |
| 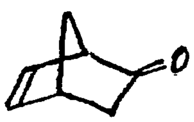 | - | 0 | : | 100 | 92,0 | 96-97°/0,1 c) | 23,3 c) |
| | + | 83 | : | 17 | 76,7 | 124/0,02 d) | 35,5 d |

a) $^{11}B$-NMR-spektroskopisch bestimmtes Umsetzungsverhältnis

b) bezogen auf isoliertes Produkt

c) Angabe für $BO_3$-Produkt

d) Angabe für $CBO_2$-Produkt

C) Katalytische Hydroborierung eines Nitrils

Zu einer Lösung von 3,62 ml Allylcyanid (45 mmol) und 208 mg Tris(triphenylphosphin)rhodium(I)chlorid (0,5 Mol%)) in 20 ml Benzol wurde tropfenweise unter Eiskühlung eine Lösung von 5,0 ml Catecholboran (45 mmol) in 10 ml Benzol gegeben. Nach 5 h zeigte ein $^{11}B$-NMR-Spektrum der Lösung fast vollständige Umsetzung an. Das Verhältnis des $CBO_2$-Produktes zum $NBO_2$-Produkt betrug 88 : 12. Nach 6 h wurde das Lösungsmittel abgezogen und im Vakuum destilliert. Ausbeute des CC-Doppelbindungs-Hydroborierungsproduktes A + B:
4,05 g (48,1 %), Sdp. 102 °C/0,07 mm.
$^1H(CDCl_3)$ 7,2 - 6,9m (8 H); 2,6 - 2,2m (4 H); 2,0 -1,7 m (3 H), 1,4 - 1,2m (5 H)
$\delta^{13}C(CDCl_3)$ 147,3; 122,0; 118,9; 111,6;, 19,3; 14,05; 9,1(br)
etwa 60 %,
147,2; 122,2; 118,6; 118,8; 19,2; 18,2; 9,1 (br)
etwa 40%
$\delta^{11}B$ $(CDCl_3)$ 34,9 h 1/2 = 670 Hz

Wird die gleiche Reaktion <u>ohne</u> Katalysator geführt, zeigt ein $^{11}B$-NMR-Spektrum der Lösung nach 4 h etwa 40 % Umsetzung an, die ausschließlich zur Reduktion der Nitrilgruppe führt ($\delta^{11}B$ 23,1 ppm). Bei längerem Rühren scheidet sich langsam eine weiße Substanz ab, die sich nicht mehr lösen oder destillieren läßt.

A = 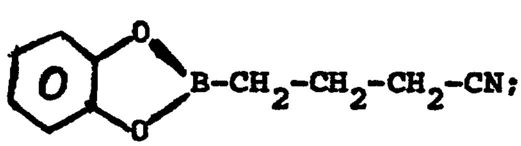 ; B = 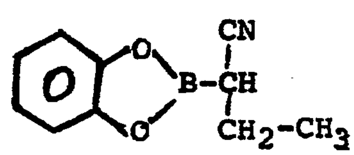

D) Katalytische Hydroborierung von Alkinen

Zu einer Mischung von 5,4 g (45 mmol) Catecholboran und 20,8mg (0,05 mmol) $ClRh(PPh_3)_3$ in 2,5 ml Benzol tropft man unter Rühren eine Lösung von 3,7 g (45 mmol) 1-Hexin in 5 ml Benzol. Nach 25 min ergab die destillative Aufarbeitung 4,73 g (52%) Hexen-2-yl-1, 3, 2-benzodioxaborolan vom Sdp. 79 - 80 °C/0,01 Torr;$\delta^{11}B$ 31,3 ppm;$\delta$ 1H: 7,15 - 6,82 (5H); 5,74 (1H); 2,3 - 1,6 (2H); 1,5 - 1,0 (4H); 1,0 -0,7 (3H).

Auf gleiche Weise wurde 3-Hexen-3-yl-1, 3, 2-benzodioxaborolan hydroboriert. Ausbeute 2,82 g (31 %); Sdp. 71 - 72 °C/0,01 Torr;$\delta^{11}B$ 32,0 ppm;$\delta^1H$: 7,15 - 6,75 (5H); 2,7 - 1,7 (4H); 1,3 - 0,8 (6H).

## Patentansprüche

1. Verfahren zur Hydroborierung von Alkenen und Alkinen mit Catecholboran (1, 3, 2-Benzodioxaborolan), gegebenenfalls unter Zusatz eines organischen Lösungsmittels, dadurch gekennzeichnet, daß die Reaktion mit einer Komplexverbindung der Formeln
(I) $RhCl(CO)_x[E(C_6H_5)_3]_{3-x}$,
worin "E" Arsen oder Phosphor und "x" gleich 0 oder 1 ist,
(II) $[RhCl(alken)_2]_2$,
(III) $[(C_6H_5)_3P]_3Ru(CO)ClH$ oder
(IV) $[(C_6H_5)_3P]_3RuCl_2$
katalysiert wird.

2. Verfahren nach Anspruch 1, dadurch gekennzeichnet, daß als Katalysator Tris(triphenylphosphin)-rhodium(I)chlorid verwendet wird.

3. Verfahren nach Anspruch 1, dadurch gekennzeichnet, daß als Katalysator Bis(triphenylphosphin)-rhodium(I)carbonylchlorid verwendet wird.

4. Verfahren nach Anspruch1, dadurch gekennzeichnet, daß als Katalysator Bis(triphenylarsin)-rhodium(I)carbonylchlorid verwendet wird.

5. Verfahren nach Anspruch 1, dadurch gekennzeichnet, daß als Katalysator Bis(äthylen)rhodium(I)-chlorid verwendet wird.

6. Verfahren nach Anspruch 1, dadurch gekennzeichnet, daß als Katalysator Bis(cyclooctadien)-rhodium(I)chlorid verwendet wird.

7. Verfahren nach den Ansprüchen 1 bis 6, dadurch gekennzeichnet, daß als organisches Lösungsmittel Benzol, Toluol, Hexan oder ein schwach koordinierender Äther verwendet wird.

8. Verfahren nach den Ansprüchen 1 bis 7, dadurch gekennzeichnet, daß die Reaktion bei Temperaturen von 0 bis 40°C, vzw. 15 bis 25 °C vorgenommen wird.

## Claims

1. Process for the hydroboronisation of alkenes and alkines with catecholborane (1, 3, 2-benzodioxaborolane), optionally with the addition of an organic solvent, characterised in that the reaction is catalysed by a complex compound having one of the formulae
(I) $RhCl(CO)_x[E(C_6H_5)_3]_{3-x}$, wherein "E" is arsenic or phosphorus and "x" equals 0 or 1,
(II) $[RhCl(alkene)_2]_2$,
(III) $[(C_6H_5)_3P]_3Ru(CO)ClH$ or
(IV) $[(C_6H_5)_3P]_3RuCl_2$.

2. Process according to Claim 1, characterised in that tris(triphenylphosphine)rhodium(I)chloride is used as a catalyst.

3. Process according to Claim 1, characterised in that bis(triphenylphosphine)rhodium(I)carbonylchloride is used as a catalyst.

4. Process according to Claim 1, characterised in that bis(triphenylarsine)rhodium(I)carbonylchloride is used as a catalyst.

5. Process according to Claim 1, characterised in that bis(ethylene)rhodium(I)chloride is used as a catalyst.

6. Process according to Claim 1, characterised in that bis(cyclooctadiene)rhodium(I)chloride is used as a catalyst.

7. Process according to Claims 1 to 6, characterised in that benzene, toluene, hexane or a weakly coordinating ether is used as an organic solvent.

8. Process according to Claims 1 to 7, characterised in that the reaction is carried out at temperatures of 0 to 40°C, preferably 15 to 25°C.

## Revendications

1. Procédé d'hydroboration d'alcènes et d'alcines par du pyrocatéchineborane (1,3,2-benzodioxaborolane), le cas échéant avec addition d'un solvant organique, caractérisé en ce qu'il consiste à catalyser la réaction par un complexe de formules
(I) $RhCl(CO)_x[E(C_6H_5)_3]_{3-x}$
dans laquelle "E" est l'arsenic ou le phosphore et "x" est égal à 0 ou à 1,
(II) $[RhCl(alcoylène)_2]_2$,
(III) $[(C_6H_5)_3P]_3Ru(CO)ClH$ ou
(IV) $[(C_6H_5)_3P]_3RuCl_2$.

2. Procédé suivant la revendication 1, caractérisé en ce qu'il consiste à utiliser comme catalyseur du chlorure de tris(triphényIphosphine)rhodium(I).

3. Procédé suivant la revendication 1, caractérisé en ce qu'il consiste à utiliser comme catalyseur du chlorure de bis(triphénylphosphine)rhodium(I)carbonyle.

4. Procédé suivant la revendication 1, caractérisé en ce qu'il consiste à utiliser comme catalyseur du chlorure de bis(triphénylarsine)rhodium(I)carbonyle.

5. Procédé suivant la revendication 1, caractérisé en ce qu'il consiste à utiliser comme catalyseur du chlorure de bis(éthylène)rhodium(I).

6. Procédé suivant la revendication 1, caractérisé en ce qu'il consiste à utiliser comme catalyseur du chlorure de bis(cyclooctadiène)rhodium(I).

7. Procédé suivant l'une des revendications 1 à 6, caractérisé en ce qu'il consiste à utiliser comme solvant organique du benzène, du toluène, de l'hexane ou un éther faiblement coordiné.

8. Procédé suivant l'une des revendications 1 à 7, caractérisé en ce qu'il consiste à effectuer la réaction à des températures de 0 à 40°C et, de préférence, de 15 à 25°C.